# EUROPEAN PATENT APPLICATION

(11) **EP 1 602 506 A2**
(43) Date of publication of application: **07.12.2005**
(21) Application number: 05011640.9
(22) Date of filing: 30.05.2005
(51) Int. Cl.: B41M 5/00

(54) **Resin composition for forming ink-receiving layer and method of forming an ink-receiving layer using said composition**

(30) Priority: 31.05.2004 JP 2004160793
(71) Applicant: TDK Corporation, Tokyo 103-8272 (JP)
(72) Inventor: Satoh, Jun-ichi, Tokyo 103-8272 (JP)
(74) Representative: Grünecker, Kinkeldey, Stockmair & Schwanhäusser Anwaltssozietät

(57) **Abstract**

To provide a resin composition for forming an ink-receiving layer allowing the ink-receiving layer to be manufactured with high productivity so that a desired image with significantly high quality standing comparison with a picture can be printed and the printed image can have a high gloss when the image is printed using an inkjet printer or the like. A resin composition for forming an ink-receiving layer containing a hydrophilic resin having 100 parts by weight and a white pigment having 2 to 20 parts by weight.

## Description

### BACKGROUND OF THE INVENTION

The present invention relates to a resin composition for forming an ink-receiving layer and a method of forming the ink-receiving layer, and more specifically, to a resin composition for forming an ink-receiving layer allowing the ink-receiving layer to be manufactured with high productivity so that a desired image with significantly high quality standing comparison with a picture can be printed and the printed image can have a high gloss when the image is printed using an inkjet printer or the like, and a method of forming the ink-receiving layer using the resin composition.

Optical recording media are mainly classified into an optical recording medium (ROM-type optical recording medium) which does not allow data to be overwritten or rewritten such as CD-ROM and DVD-ROM, an optical recording medium (write-once-type optical recording medium) which allows data to be overwritten but does not allow data to be rewritten such as CD-R and DVD-R, and an optical recording medium (rewritable optical recording medium) which allows data to be rewritten such as CD-RW and DVD-RW.

In the write-once type optical recording medium or the rewritable optical recording medium, in order for a user to display contents of data in the optical recoding medium, which has been recorded, on the optical recording medium, the optical recording medium having an ink-receiving layer capable of displaying or printing contents of the data by means of an inkjet printer or the like on a surface of the optical recording medium opposite to an incident surface to which a laser beam is incident.

For example, an optical recording medium on which a white under layer and an ink-receiving layer are formed in this order on a surface of the optical recording medium opposite to an incident surface to which the laser beam is incident.

Typically, the under layer of the optical recording medium is formed coating a resin composition with a high viscosity by means of a screen printing method on a surface of the optical recording medium opposite to a surface on which the laser beam is incident, and curing the coated layer, so that a mesh mark of a screen used for screen printing remains on a surface of the under layer or an undulation occurs on the surface of the under layer, which degrades a surface smoothness.

Accordingly, even when an image is printed on the ink-receiving layer formed on a surface of the under layer using a high-accuracy inkjet printer capable of obtaining a clear image and a superior printing quality and printing the image with a high quality standing comparison with a picture, the surface smoothness of the ink-receiving layer significantly affects the surface smoothness of the under layer, so that a mesh mark or an undulation occurs also on the surface of the ink-receiving layer, which degrades the gloss of the printed image and makes it difficult to print the image with a high quality.

In addition, such an optical recording medium has not only the ink-receiving layer but also the white under layer formed therein, so that the manufacturing cost of the optical recording medium increases and its productivity is also degraded.

In the meantime, in order to enhance productivity of the ink-receiving layer and the optical recording medium having the same, when the white ink-receiving layer is formed without forming the white under layer on one surface of the optical recording medium, it is necessary to contain a large amount of white pigment or filler in a resin composition for forming the ink-receiving layer so as to make aqueous ink or pigment used to print the image strongly and rapidly absorbed, so that it is known that a surface of the formed ink-receiving layer becomes very rough to significantly degrade the gloss of the printed image, and it is also known that white pigment or filler contained in the ink-receiving layer is mixed with ink or pigment penetrated in the ink-receiving layer and the ink or the pigment penetrated in the ink-receiving layer is diffused within the ink-receiving layer to significantly degrade the quality of the printed image due to the diffusion of the printed image. Accordingly, in order to enhance the gloss of the image and to print the image with a high quality, it was expected that the ink-receiving layer arranged in the optical recording medium must be transparent and the white under layer must be formed below the ink-receiving layer.

It was thus expected that it is difficult to enhance the productivity while further enhancing the gloss of the printed image and the quality in the optical recording medium having the ink-receiving layer.

### SUMMARY OF THE INVENTION

Accordingly, an object of the present invention is to provide a resin composition for forming an ink-receiving layer allowing the ink-receiving layer to be manufactured with high productivity so that a desired image with significantly high quality standing comparison with a picture can be printed and the printed image can have a high gloss when the image is printed using an inkjet printer or the like.

In addition, another object of the present invention is to provide a method of forming an ink-receiving layer allowing the ink-receiving layer to be manufactured with high productivity so that a desired image with significantly high quality standing comparison with a picture can be printed and the printed image can have a high gloss when the image is printed using an inkjet printer or the like.

### [Means for Solving the Problems]

In order to achieve the above-mentioned objects, it has been found that, when the ink-receiving layer is formed by a resin composition for forming the ink-receiving layer containing a hydrophilic resin with 100 parts by weight and a white pigment with 2 to 20 parts by weight, the ink-receiving layer having a superior surface smoothness can be formed without forming the white under layer, the printed image is not blurred in which otherwise the white pigment contained in the ink-receiving layer is mixed with the ink or dye penetrated in the ink-receiving layer to be diffused into the ink-receiving layer, so that the gloss of the image printed on the ink-receiving layer is significantly high and the desired image can be printed with significantly high quality standing comparison with the picture.

The present invention is based on the above-described knowledge. According to the present invention, the object of the present invention is achieved by the resin composition for forming the ink-receiving layer containing a hydrophilic resin with 100 parts by weight and a white pigment with 2 to 20 parts by weight.

According to the present invention, the resin composition for forming the ink-receiving layer can be coated using a spin coating method or a slot coating method instead of the screen printing method, so that ink-receiving layer having a superior surface smoothness can be readily formed.

In addition, according to the present invention, when the image is printed using an inkjet printer or the like without forming the white under layer, it is possible to form the ink-receiving layer having a significantly high gloss of the printed image and capable of printing the image with significantly high quality. Accordingly, it is possible to increase the productivity of the optical recording medium.

In the present invention, when the content of the white pigment is less than 2 parts by weight, the whiteness degree of the resin composition for forming the ink-receiving layer cannot sufficiently increase, and the color purity of the image printed on the ink-receiving layer decreases, so that the image cannot be printed with significantly high quality standing comparison with the picture. In the meantime, when the content of the white pigment exceeds 20 parts by weight, a large amount of white pigment is present on a surface of the ink-receiving layer, and the white pigment is apt be aggregated to each other, so that the surface smoothness of the ink-receiving layer significantly decreases, which causes the gloss of the image printed on the ink-receiving layer to decrease, and the image cannot be printed with significantly high quality standing comparison with the picture because of blurring of the printed image. In the present invention, the content of the white pigment contained in the resin composition for forming the ink-receiving layer is preferably 2 to 17 parts by weight, and more preferably 2.5 to 15 parts by weight.

In the present invention, the white pigment preferably has an average particle diameter of 0.1 µm to 1.0 µm, and more preferably have an average particle diameter of 0.1 µm to 0. 5 µm. In order to make the white pigment act as a white pigment emitting white colors, it is necessary to have the white pigment with an average particle diameter of 0.1 µm or more, and when the white pigment has an average particle diameter of 0.1 µm to 1.0 µm, the surface smoothness of the ink-receiving layer can be further enhanced, and the transparency of the ink-receiving layer can be further enhanced, and the light incident on the ink-receiving layer can be readily scattered, so that the transparency of the ink-receiving layer can be further enhanced.

In the present invention, the average particle diameter of the white pigment is defined as a median diameter measured by laser diffractive scattering using a microtrack particle size analyzer HRA (X100) (trade name) made by NIKKISO Co., Ltd. and using water as solvent.

In the present invention, the white pigment preferably has a refractive index (n) of 2.0 or more, and more preferably has a refractive index (n) of 2.3 or more. When the refractive index (n) of the white pigment is 2.0 or more, the whiteness degree of the ink-receiving layer increases, so that the quality of the printed image can be further enhanced.

In the present invention, it is preferable to use a titanium oxide having a refractive index (n) of 2.0 or more as the white pigment. When the titanium oxide is employed as the white pigment, the image having significantly high quality and a high gloss of the printed image standing comparison with a picture can be printed when the image is printed on the ink-receiving layer using an inkjet printer or the like.

In addition, the titanium oxide preferably has an average particle diameter of 0.1 µm to 1.0 µm, more preferably 0.1 µm to 0.5 µm, and more preferably 0.15 µm to 0.3 µm. When the titanium oxide has an average particle diameter of 0.15 µm to 0.3 µm, the surface smoothness of the ink-receiving layer can be further enhanced, the image having significantly high quality and a high gloss of the printed image standing comparison with a picture can be readily and reliably printed when the image is printed on the ink-receiving layer using an inkjet printer or the like.

In the present invention, the hydrophilic resin preferably has a cationic polar group. In this case, it is possible for the hydrophilic resin having the cationic polar group to further enhance the quality of the printed image by strongly and rapidly absorbing and fixing the aqueous ink or dye used to print the image. In the present invention, the cationic polar group means a polar group such as an amino group, an amide group, and bases thereof.

In the present invention, the hydrophilic resin preferably has a cross-linking group. In this case, it is possible to enhance the water resistive property of the formed ink-receiving layer. In the present invention, the cross-linking group is not particularly limited when it is capable of being subject to cross-linking reaction by the presence of oxygen or heat, and may include a group or silanol group having a carbon-carbon double bond capable of being subject to oxidative polymerization, and an isocyanate group or an epoxy group.

In the present invention, the resin composition for forming the ink-receiving layer preferably contains colloidal silica with 2 to 20 parts by weight to the hydrophilic resin with 100 parts by weight. When the resin composition for forming the ink-receiving layer contains the colloidal silica with 2 to 20 parts by weight, the surface of the ink-receiving layer can be further leveled, so that the gloss of the ink-receiving layer can be further enhanced. In addition, the colloidal silica can be effectively prevented from moving toward the surface of the ink-receiving layer when the ink-receiving layer is formed, so that the aqueous ink or dye used to print the image can be rapidly penetrated into the ink-receiving layer. In the present invention, when the colloidal silica is contained in the resin composition for forming the ink-receiving layer, the content of the colloidal silica is preferably 3 to 10 parts by weight.

In the present invention, the colloidal silica is preferably surface-treated by a basic compound. In this case, transparency and quality of the printed image can be further enhanced by properly absorbing the aqueous ink or dye used to print the image by means of the surface-treated colloidal silica. In the present invention, the basic compound used to surface-treat the colloidal silica is not particularly limited. For example, an inorganic compound such as an aluminum hydroxide may be preferably used. A method of surface-treating the colloidal silica by means of the basic compound is not particularly limited.
For example, a condition for making a silanol group present on a surface of the colloidal silica react with a base group present in the basic compound may be randomly selected.

In the present invention, the resin composition for forming the ink-receiving layer preferably contains a surface active agent with 0.01 to 1.0 parts by weight to the hydrophilic resin with 100 parts by weight. When the resin composition for forming the ink-receiving layer contains the surface active agent with 0.01 to 1.0 parts by weight, the surface of the ink-receiving layer can be more leveled by uniformly mixing the resin composition for forming the ink-receiving layer, so that the gloss of the printed image can be further enhanced. In the present invention, when the surface active agent is contained in the resin composition for forming the ink-receiving layer, the content of the surface active agent is preferably 0.05 to 0.5 parts by weight to the hydrophilic resin with 100 parts by weight.

In the present invention, the surface active agent is preferably selected depending on the hydrophilic resin and the white pigment. For example, the cationic surface active agent is selected when the white pigment is acidic, and the anionic surface active agent is selected when the white pigment has a base group, and it is preferable to select a surface active agent compatible with the hydrophilic resin. The surface active agent is selected in the above-described manner, but, it is preferable to have an anionic high molecular active agent as the anionic surface active agent.

In the present invention, the resin composition for forming the ink-receiving layer may contain an additive, and solvent such as an ink fixing agent if necessary besides the hydrophilic resin, the white pigment, the colloidal silica and the surface active agent.

When the ink fixing agent is contained, the hydrophilic property of the hydrophilic resin and the cationic property can be further enhanced, and it is possible to further enhance the quality of the printed image by strongly and rapidly absorbing and fixing the aqueous ink or dye used to print the image.

The resin compositions for forming the ink-receiving layer are used, for example, in order to form the ink-receiving layer of the optical recording medium. The optical recording medium is not particularly limited, and may include a DVD-type optical recording medium, a next generation type optical recording medium in which an optical transmitting layer for allowing a laser beam to be transmitted therethrough is arranged, and a CD-type optical recording medium. In addition, a rewritable optical recording medium, or an write-once type optical recording medium can be employed as the DVD type optical recording medium and the next generation type optical recording medium, or an ROM type optical recording medium may be employed for the same.

For example, in a case of the DVD-type optical recording medium, an ink-receiving layer is formed on a surface of the dummy substrate by the resin composition for forming the ink-receiving layer according to the present invention, and in a case of the next-generation optical recording medium, an ink-receiving layer is formed on a surface of the support substrate opposite to the optical transmitting layer by the resin composition for forming the ink-receiving layer according to the present invention.

In addition, the another object of the present invention is achieved by a method of forming an ink-receiving layer on an optical recording medium having light transmissivity, and having a first resin layer through which a laser beam is transmitted, a second resin layer, and an information layer held between the first and second resin layers, and the method includes coating a solution of the resin composition for forming the ink-receiving layer on a surface of the second resin layer to form a coated layer; and having the coated layer dried to be cured.

In the present invention, it is preferable to coat a solution of the resin composition for forming the ink-receiving layer so as to make the ink-receiving layer have a thickness of 10 µm to 20 µm. When the ink-receiving layer is formed with a thickness of 10 µm to 20 µm, the surface smoothness of the ink-receiving layer is significantly good, and it is possible to sufficiently absorb the aqueous ink or dye in the ink-receiving layer which is used to print the image.

In the present invention, a solution of the resin composition for forming the ink-receiving layer is preferably coated by a spin coating method or a slot coating method, and more preferably by the slot coating method. When the solution of the resin composition for forming the ink-receiving layer is coated by the spin coating method or the slot coating method, the solution of the resin composition for forming the ink-receiving layer can be uniformly coated, so that the ink-receiving layer having a superior surface smoothness can be formed. When the solution of the resin composition for forming the ink-receiving layer is coated by the slot coating method, it is possible to readily coat the solution of the resin composition for forming the ink-receiving layer so as to make the ink-receiving layer have a thickness of 10 µm to 20 µm.

According to the present invention, it is possible to provide a resin composition for forming an ink-receiving layer allowing the ink-receiving layer to be manufactured with high productivity so that a desired image with significantly high quality standing comparison with a picture can be printed and the printed image can have a high gloss when the image is printed using an inkjet printer or the like.
In addition, according to the present invention, it is possible to provide a method of forming an ink-receiving layer allowing the ink-receiving layer to be manufactured with high productivity so that a desired image with significantly high quality standing comparison with a picture can be printed and the printed image can have a high gloss when the image is printed using an inkjet printer or the like.

### BRIEF DESCRIPTION OF THE DRAWINGS

Fig. 1 is a perspective view schematically illustrating an appearance of an optical recording medium having an ink-receiving layer formed by a resin composition for forming the ink-receiving layer with a part of the medium being cutaway.
Fig. 2 is an enlarged cross-sectional view schematically illustrating a part denoted by A of Fig. 1.

### DETAILED DESCRIPTION OF THE PREFERRED EMBODIMENTS

In the present invention, the resin composition for forming the ink-receiving layer of the optical recording medium contains a hydrophilic resin with 100 parts by weight and a white pigment with 20 parts by weight. By means of this configuration, it is possible to readily form the ink-receiving layer with a high surface smoothness and to print the image with significantly high quality standing comparison with a picture and having a high gloss of the image printed on the formed ink-receiving layer.

In the present invention, the hydrophilic resin contained in the resin composition for forming the ink-receiving layer is not particularly limited when it has a hydrophilic property to water, for example, polyethylene oxide, polyvinyl acetal, polyvinyl alcohol, polyvinyl methylether, polyvinyl formal, carboxyvinyl polymer, carboxymethyl cellulose, sodium carboxymethyl cellulose, hydroxyethyl cellulose, hydroxyprophyl cellulose, methyl cellulose, polyvinyl pyrollidone, morphorin, styrene-maleic anhydride copolymer, polyacrylic acid pyrollidenyl ethyl ester, polyacrylilic acid and its metal base, polyamine, polyacrylamide, polyethylene glycol, polydiethylaminoethyl(metha)acrylate, polyhydroxy styrene, polyvinyl alkyl ether, polyvinyl hydroxybenzoate, poly phthalic acid, acetic acid cellulose hydroxydienphthalate, gelatin, arabia gum, Gar gum, alginic acid soda, and so forth may be employed for the same, and only one kind or at least two kinds of the hydrophilic resin may be employed.

The hydrophilic resin preferably has a cationic polar group, and polyvinyl pyrollidone, polyacrylamide and so forth among the above-descried hydrophilic resins may be employed as the hydrophilic resin having the cationic polar group, and the hydrophilic resin which makes the compound having the cationic polar group being subject to copolymerization or graft polymerization to the above-described hydrophilic resin may also be employed. When the hydrophilic resin has the cationic polar group, it is possible to further enhance the quality of the image printed on the ink-receiving layer by strongly and rapidly absorbing and fixing the aqueous ink or dye used to print the image. In this case, a polar group such as an amino group, an amide group, and bases thereof may be employed as the cationic polar group.

The presence rate of the cationic polar group of the hydrophilic resin is not particularly limited, and a condition for making the compound having a cationic polar group being subject to graft polymerization or copolymerization to the hydrophilic resin may be randomly select from the conditions to be typically carried out.

In addition, the hydrophilic resin preferably has a cross-linking group, and a hydrophilic resin, which introduces the cross-linking group by making the compound having the cross-lining group being subject to copolymerization or graft polymerization to the above-described hydrophilic resin, may be employed as the hydrophilic resin further having the cross-linking group. When the hydrophilic resin preferably has the cross-linking group, it is possible to enhance a water resistive property of the formed ink-receiving layer. In this case, the cross-linking group is not particularly limited when it is capable of being reacted wit the cross-linking due to the presence of oxygen or heat, and may include, for example, a group or silanol group having a carbon-carbon double bond capable of being subject to oxidative polymerization, and an isocyanate group or an epoxy group.

The presence rate of the cross-linking base of the hydrophilic resin is not particularly limited, and a condition for making the compound having the cross-linking group being subject to graft polymerization or copolymerization to the hydrophilic resin may be randomly selected from the conditions to be typically carried out.

In the present invention, the resin composition for forming the ink-receiving layer contains a white pigment with 2 to 20 parts by weight to the hydrophilic resin with 100 parts by weight. When the content of the white pigment is less than 2 parts by weight, the image cannot be printed with a high quality standing comparison with the picture. In the meantime, when the content of the white pigment exceeds 20 parts by weight, the gloss of the image printed on the ink-receiving layer is degraded, and the desired image cannot be printed with a high quality standing comparison with the picture. The content of the white pigment is preferably 2 to 17 parts by weight, and more preferably 2.5 to 15 parts by weight.

In the present invention, the white pigment contained in the resin composition for forming the ink-receiving layer is not particularly limited, and may include, for example, titanium oxide, lead oxide, aluminum oxide, aluminum hydroxide, white lead (lead carbonate), strontium titanate, calcium carbonate, mica, barium sulfate, silica, talc, kaolin clay, raw stone clay, Zeolite and so forth, and only one kind of the white pigment may be employed, or at least two kinds thereof may also employed.

These white pigments preferably have an average particle diameter of 0.1 µm to 1.0 µm, and more preferably have an average particle diameter of 0.1 µm to 0.5 µm. In order to make the white pigment act as a white pigment emitting white colors, it is necessary to have the white pigment with an average particle diameter of 0.1 µm or more, and when the white pigment has an average particle diameter of 0.1 µm to 1.0 µm, the surface smoothness of the ink-receiving layer can be further enhanced, and the transparency of the ink-receiving layer can be further enhanced. In this case, the average particle diameter of the white pigment is defined as a median diameter measured by a laser diffractive scattering using a microtrack particle size analyzer HRA (X100) (trade name) made by NIKKISO Co., Ltd. and using water as solvent.

In addition, the white pigment preferably has a refractive index n of 2.0 or more, and may include, for example, a titanium oxide (rutile type: refractive index (n) of 2.76; anatase type: refractive index (n) of 2.52), potassium titanate (refractive index (n) of 2.68), zirconium oxide (refractive index (n) of 2.40), antimony oxide (refractive index (n) of 2.09 to 2.29), lead titanate (refractive index (n) of 2.70), zinc sulfate (refractive index (n) of 2.37 to 2.43), and zinc oxide (refractive index (n) of 2.01 to 2.03). When the white pigment has the refractive index (n) of 2.0 or more, the quality of the printed image is further enhanced. The white pigment has preferably a refractive index (n) of 2.3 or more.

Among these white pigments, titanium oxide is preferably used as the white pigment because the gloss of the printed image is significantly high and the desired image having significantly high quality standing comparison with the picture can be printed. An average particle diameter of the titanium oxide is preferably 0.1 µm to 1.0 µm, and more preferably 0.1 µm to 0.5 µm, and more preferably 0.15 µm to 0.3 µm. When the titanium oxide has an average particle diameter of 0.15 µm to 0.3 µm, the gloss of the printed image can be significantly high, and the desired image having significantly high quality standing comparison with the picture can be readily and reliably printed. Such a titanium oxide may include, for example, A-190 (trade name; average particle diameter of 0.15 µm) made by Sakai Chemical Industry Co., Ltd., KRONOS KA-30, KR460 (trade name; average particle diameter of 0.3 µm) made by Titan Kogyo Kabushiki Kaisha, and so forth.

In the present invention, the resin composition for forming the ink-receiving layer preferably contains colloidal silica with 2 to 20 parts by weight to the hydrophilic resin with 100 parts by weight. The colloidal silica is a colorless and transparent particle having a particle diameter of 0.1 µm or less, and can be used in an initially dispersed form. When the resin composition for forming the ink-receiving layer has the colloidal silica with 2 to 20 parts by weight, the surface of the ink-receiving layer can be further leveled so that the gloss of the printed image can be further enhanced. In addition, the colloidal silica can be effectively prevented from moving toward the surface of the ink-receiving layer when the ink-receiving layer is formed, so that the water base ink or dye used to print the image can be rapidly penetrated into the ink-receiving layer. When the colloidal silica is contained, the content of the same is preferably 3 to 10 parts by weight.

The colloidal silica is preferably surface-treated by a basic compound. For example, a colloidal silica surface-treated by aluminum hydroxide (SNOWTEX AK (trade name; 20% solvent) made by Nissan Chemical Industries, Ltd.) which is obtained by making the aluminum hydroxide with 5 to 20 parts by weight react with the silica with 100 parts by weight, may be employed. In this case, the transparency and quality of the printed image can be further enhanced. The basic compound used to surface-treat the colloidal silica is not particularly limited. For example, an inorganic compound such as an aluminum hydroxide may be preferably used. A method of surface-treating the colloidal silica by means of the basic compound is not particularly limited. For example, a condition for making a silanol group present on a surface of the colloidal silica react with a base group present in the basic compound may be randomly selected.

In the present invention, the resin composition for forming the ink-receiving layer preferably contain a surface active agent with 0.01 to 1.0 parts by weight to the hydrophilic resin with 100 parts by weight. When it contains the surface active agent with 0.01 to 1.0 parts by weight, the gloss of the printed image can be further enhanced. The content of the surface active agent is more preferably 0.05 to 0.5 parts by weight to the hydrophilic resin with 100 parts by weight.

The surface active agent is not particularly limited, and for example, may include a cationic surface active agent, an anionic surface active agent, and a nonionic surface active agent, and only one kind or at least two kinds of the surface active agents may also be employed.

These surface active agents are selected depending on the hydrophilic resin and the white pigment. For example, the cationic surface active agent is selected when the white pigment is acidic, and the anionic surface active agent is selected when the white pigment is basic, and it is preferable to select a surface active agent compatible with the hydrophilic resin.

The surface active agent is selected in the above-described manner, and an anionic high molecular active agent is preferably selected as the anionic surface active agent.
When the anionic high molecular active agent is employed, the white pigment can be more uniformly dispersed so that the gloss of the surface of the ink-receiving layer can be further enhanced and the surface tension of the resin composition for forming the ink-receiving layer can be lowered, thereby obtaining a high leveling effect and allowing the surface smoothness of the ink-receiving layer to be further enhanced. Such an anionic high molecular surface active agent, for example, may include NOPCOSPAS 44-C (trade name) made by Sannopco Limited, RE610 (trade name) made by TOHO Chemical Industry Co., Ltd., and HKM-50A (trade name) made by NOF Corporation.

In the present invention, the resin composition for forming the ink-receiving layer contains the hydrophilic resin and the white pigment, and preferably contains colloidal silica and the surface active agent, but besides these components, it may include an additive, solvent or the like, such as an ink fixing agent, an antistatic finish agent, an antioxidation agent, antifoaming agent, a dye binder, a pigment, a thickner, a PH adjusting agent, a lubricant, a denaturant, a foam depressant, a stripping agent, a penetrant, a fluorescent brightening agent, and so forth if necessary.

In the present invention, the resin composition for forming the ink-receiving layer is prepared by uniformly dispersing the hydrophilic resin and the white pigment, and if necessary, together with colloidal silica, surface active agent, additive or the like in water or solvent by means of an emulsion disperser such as a high-speed agitator or a homogenizer.

The solvent is not particularly limited, and, for example, may employ an alcoholic solvent, an aromatic hydrocarbon solvent, a ketone solvent, an ester solvent, an alicyclic hydrocarbon solvent, a higher fatty acid solvent, a carbitol solvent, a cellosolve solvent, a higher fatty acid ester solvent and so forth.

In the present invention, it is preferable to adjust each component of the resin composition for forming the ink-receiving layer in a solution that the components are uniformly dispersed in water or solvent in terms of its superior operability. In this case, a solid content concentration of the solution is not particularly limited, and, for example, preferably has 5 to 20 parts by weight to a total weight of the solution because of its superior operability.

The resin composition for forming the ink-receiving layer of the present invention as described above is used, for example, in order to form an ink-receiving layer of an optical recording medium.

Hereinafter, an optical recording medium having an ink-receiving layer formed by a resin composition for forming the ink-receiving layer of the present invention will be described in detail with reference to the accompanying drawings.

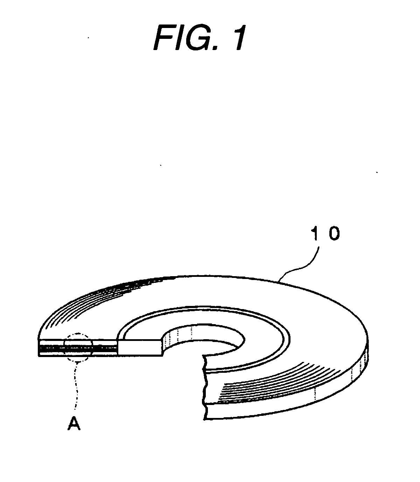

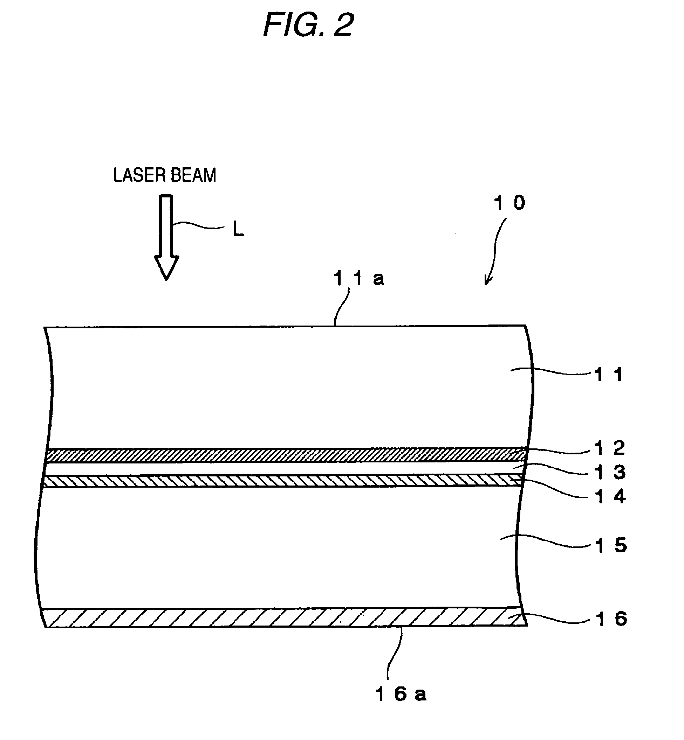

Fig. 1 is a perspective view schematically illustrating an appearance of an optical recording medium having an ink-receiving layer formed by a resin composition for forming the ink-receiving layer with a part of the medium being cutaway, and Fig. 2 is an enlarged cross-sectional view schematically illustrating a part denoted by A of Fig. 1.

As shown in Fig. 1, the optical recording medium 10 is disk-shaped, and has an outer diameter of 120 mm and a thickness of about 1.2 mm.

As shown in Fig. 2, the optical recording medium 10 is a rewritable optical recording medium, and has a substrate 11 with light transmissivity, an information layer 12, a protective layer 13, an adhesive layer 14, and a dummy substrate 15 in this order.

In the present embodiment, the laser beam L is irradiated onto the substrate 11, and an optical incident surface 11a is formed on a surface of the substrate 11.

As shown in Fig. 2, the ink-receiving layer 16 is formed on a surface of the dummy substrate 15.

The substrate 11 acts to ensure the mechanical strength of the optical recording medium 10, and has a thickness of about 0.6 mm. Grooves (not shown) and lands (not shown) acting as guide tracks of the laser beam L are alternately formed on a surface of the information layer 12 of the substrate 11.

A material for forming the substrate 11 is not particularly limited when it has a sufficiently high light transmittance in a wavelength range of the laser beam L, and is formed by, for example, a polycarbonate resin.

The information layer 12 is a layer in which data are recorded, and it has a recording film (not shown) containing a phase change material and a reflective film (not shown) reflecting the laser beam L in the present embodiment.

The protective layer 13 acts to physically and chemically protect the information layer 12. A material for forming the protective layer 13 is not particularly limited when it can physically and chemically protect the information layer 12, and is formed by, for example, an acrylic UV-curable resin.

The adhesive layer 14 is a layer for adhering the dummy substrate 15 to a laminate comprised of the substrate 11, the information layer 12 and the protective layer 13, and is formed by, for example, a UV-curable adhesive.

The dummy substrate 15 acts as a support body for ensuring a thickness (about 1.2 mm) required for the optical recording medium 10, and has a thickness of about 0.6 mm.
A material for forming the dummy substrate 15 is not particularly limited, and it is formed of, for example, a polycarbonate resin.

The ink-receiving layer 16 has a function of receiving ink or dye for an inkjet printer or the like, and is formed to have a thickness of 10 µm to 20 µm by means of the resin composition for forming the ink-receiving layer containing a hydrophilic resin with 100 parts by weight and a white pigment with 2 to 20 parts by weight.

A method of forming the ink-receiving layer 16 is not particularly limited, and may include coating a solution of the resin composition for forming the ink-receiving layer to form a coated layer on a surface of the dummy substrate 15, and drying the coated layer to be cured.

The coating method is not particularly limited, and may employ a spin coating method, a slot coating method, a roll coating method, a blade coating method, an air knife coating method, a gate roll method, a bar coating method, a size press method, a spray coating method, a gravure coating method, a curtain coating method, a load blade coating method, a lip coating method, a slit die coating method and so forth. However, in order to form the ink-receiving layer 16 having a superior surface smoothness, it is preferable to form the ink-receiving layer 16 by means of the spin coating method or the slot coating method, and it is more preferable to form the ink-receiving layer 16 by means of the slot coating method because the ink-receiving layer 16 can be readily formed with a thickness of 10 µm to 20 µm.

The amount of coating the resin composition for forming the ink-receiving layer is not particularly limited, but it is preferable to determine the amount of coating the resin composition for forming the ink-receiving layer so as to form the ink-receiving layer with a thickness of 10 µm to 20 µm. In particular, when a solid content concentration of the solution of the resin composition for forming the ink-receiving layer is 10 to 20 parts by weight, the amount of coating the resin composition for forming the ink-receiving layer is adjusted so as to have a thickness of the coated layer in a range of about 100 µm to about 200 µm after coating is carried out.

The conditions for drying the coated layer are not particularly limited when it can remove water or solvent contained in a solution of the resin composition for forming the ink-receiving layer, for example, it is preferable to dry the coated layer for 1 to 30 minutes at a temperature of 50°C to 200°C, and it is more preferable to dry the coated layer for 1 to 20 minutes at a temperature of 80°C to 120°C.

An image is printed on the ink-receiving layer 16 using an inkjet printer or the like. In the present embodiment, when an image is printed, the ink or dye used for printing is penetrated into the ink-receiving layer 16 so that it is sufficiently absorbed, which allows a desired image to be formed in the ink-receiving layer with a significantly high gloss and significantly high quality standing comparison with a picture.

The aqueous ink or dye used to print the image in the ink-receiving layer 16 is not particularly limited, and may employ an ink or dye used for flexography printing, photogravure printing, offset printing, projection plate printing or the like, or an ink and dye used for pen besides the aqueous ink used for the inkjet printer.

In the optical recording medium 10 having the above-described structure, for example, a laser beam L having a wavelength of about 650 nm is irradiated onto the light incident surface 11a to make data recorded on the information layer 12 and make data recorded on the information layer 12 reproduced.

### [Examples]

Hereinafter, examples will be described for clarity of effects of the present invention.

### Example 1

First, a disk-shaped substrate was formed by injection molding, which has a thickness of about 0.6 nm and an outer diameter of about 120 mm and is formed of a polycarbonate resin on a surface of the substrate in which grooves and lands (track pitch (pitch of the grooves) = about 0.74 µm) are formed.

Subsequently, a disk-shaped dummy substrate was formed by injection molding in the same manner, which has a thickness of about 0.6 nm and an outer diameter of about 120 mm, and is formed of a polycarbonate resin on a surface of the substrate in which grooves and lands are not formed.

The substrate obtained as such was set on a spin coating device, which was rotated while the recording film was formed on a surface of the substrate in which the grooves and lands are formed.

In addition, the substrate on which the recording film was formed was set on a sputtering device, and the reflective film having a thickness of about 150 nm was formed on a surface of the recording film.

Subsequently, the substrate on which the recording film and the reflective film were formed was set on the spin coating device again, which was rotated while the UV-curable acrylic resin was dropped onto the reflective film to form the coated layer, and UV light was irradiated to the coated layer to be cured, thereby forming the protective layer.
In addition, the UV-curable adhesive was dropped onto the protective layer to form the coated layer, and the UV-light was irradiated to the coated layer to be cured, thereby forming the adhesive layer.

Subsequently, a dummy substrate was bonded to a surface of the adhesive layer, and UV light was irradiated from a side of the dummy substrate to cure the adhesive layer, thereby manufacturing a laminate comprised of the substrate, the recording film, the reflective film, the protective layer, the adhesive layer, and the dummy substrate.

Subsequently, a mixture of polyacrylamide and cellulose with 85 parts by weight (hydrophilic resin, trade name SP30422 made by Teikoku Printing Inks Mfg. Co., Ltd.) was dissolved in water with 720 parts by weight, and titanium oxide with 10 parts by weight (white pigment, average particle diameter; 0.15 µm, a refractive index (n); 2.5, trade name A-190 made by Sakai Chemical Industry Co., Ltd.) (11.8 parts by weight to the hydrophilic resin with 100 parts by weight), colloidal silica (trade name SNOWTEX AK (solvent of 20%) made by Nissan Chemical Industries, Ltd.) (5.9 parts by weight to the hydrophilic resin 100 parts by weight), and an anionic high polymer active agent (surface active agent; trade name HKM-50A made by NOF Corporation) (0.24 parts by weight to the hydrophilic resin with 100 parts by weight) were added thereto, and isoprophyl alcohol with 40 parts by weight was added, which was mixed by agitation for a while and then uniformly dispersed with 4000PSI at room temperature (25°C) using a homogenizer 15TR (trade name) made by Colin Medical Technology Corporation, thereby preparing a solution of the resin composition for forming the ink-receiving layer.

In addition, a head having a slit in which the slit width of the innermost periphery is 0.08 mm and the slit width of the outermost periphery is 0.12 mm was set at a position 0.09 mm away from a surface of the dummy substrate of the laminate, and the laminate was rotated at 14 rpm while a total of 2.5 g of a solution of the resin composition for forming the ink-receiving layer was supplied from the slit into a radius range of 20 mm to 58 mm from a center of the laminate, thereby forming the coated layer.

Subsequently, the laminate was rotated at 100 rpm for 15 seconds to level the coated layer, and the coated layer was dried at 80°C for 5 minutes, thereby forming the ink-receiving layer with a thickness of 20 µm.

Accordingly, Sample 1 of a DVD-type optical recording medium was manufactured.

### Example 2

Similar to Sample 1 of the optical recording medium, Sample 2 of the optical recording medium was manufactured except that polyvinyl pyrollidone (hydrophilic resin; trade name Rubiscole K80, made by BASF) was employed instead of a mixture of polyacrylamide and cellulose.

### Example 3

Similar to Sample 1 of the optical recording medium, Sample 3 of the optical recording medium was manufactured except that polyvinyl alcohol (hydrophilic resin; trade name KURARAY POVAL PVA 117, made by KURARAY CO., LTD.) was employed instead of a mixture of polyacrylamide and cellulose.

### Comparative Example 1

Similar to Sample 1 of the optical recording medium, Comparative Sample 1 of the optical recording medium was manufactured except that the content of titanium oxide is set to 1.3 parts by weight (1.5 parts by weight to the hydrophilic resin with 100 parts by weight).

### Comparative Example 2

Similar to Sample 1 of the optical recording medium, Comparative Sample 2 of the optical recording medium was manufactured except that the content of titanium oxide is set to 25 parts by weight (29 parts by weight to the hydrophilic resin with 100 parts by weight).

### Comparative Example 3

First, similar to Example 1, a laminate composed of a substrate, a recording film, a reflective film, a protective layer, an adhesion layer, and a dummy substrate was manufactured.

Subsequently, by means of the screen printing using a screen mesh of #420, a UV-curable resin (made by Dainichiseika Color & Chemicals Mfg. Co., Ltd. Trade name: SEIKA BEAM SCR-VID F29 white; a viscosity of 16,000 mPa·s at 25°C) having a thickness of about 10 µm was coated on a surface of the dummy substrate of the laminate and UV light was irradiated onto the coated layer to cure the coated layer, thereby obtaining the under layer. It was taken for one minute until UV light was irradiated after the UV-curable resin was coated by means of the screen printing.

In addition, a mixture (hydrophilic resin) with 100 parts by weight of polyacrylamide and cellulose was dissolved in water with 720 parts by weight and isoprophylalcol with 40 parts by weight was then added thereto, which was mixed by agitation and uniformly dispersed with 4000PSI in the atmosphere at room temperature (25°C) using a homogenizer 15TR (trade name) made by Colin Medical Technology Corporation, thereby obtaining a solution of the resin composition.

Subsequently, similar to Example 1, a solution of the resin composition was coated on a surface of the dummy substrate of the laminate to form the ink-receiving layer, and Comparative Sample 3 of the optical recording medium was manufactured.

The surface smoothness of each of Samples 1 to 3 of the optical recording medium and Comparative Samples 1 to 3 of the optical recording medium went through visual inspection.

As a result, it was determined that all of the ink-receiving layers of Samples 1 to 3 of the optical recording medium and the Comparative Sample 1 of the optical recording medium had a significantly high surface smoothness. On the contrary, the ink-receiving layer of Comparative Sample 2 of the optical recording medium has a large amount of titanium oxides on its surface, and some of the titanium oxides are aggregated to each other so that the surface smoothness of the ink-receiving layer was low, and a mesh mark of the screen occurred on the under layer of Comparative Sample 3 of the optical recording medium to cause the undulation, so that the ink-receiving layer of the Comparative Sample 3 of the optical recording medium had a low surface smoothness.

Subsequently, Samples 1 to 3 of the optical recording medium the Comparative Samples 1 to 3 of the optical recording medium were set on an inkjet printer called "Calario PM-G800" (dye ink employed and resolution of 1440 dpi) manufactured by an EPSON Co. Ltd., and an image was printed on the ink-receiving layer of each sample in setting conditions of the high quality CD/DVD, so that each image printed on Samples 1 to 3 of the optical recording medium and Comparative Samples 1 to 3 of the optical recording medium went through visual inspection.

As a result, all of Samples 1 to 3 of the optical recording medium had a significantly high gloss of the printed image and significantly high quality standing comparison with a picture quality. However, Comparative Sample 1 of the optical recording medium has a low image quality because it lacks in a white color of the ink-receiving layer to cause the image to be reflected on the reflective film formed below the transparent dummy substrate, and both of Comparative Samples 2 and 3 of the optical recording medium had a low image quality because of a shortage of the gloss of the printed image.

## Claims

1. A resin composition for forming an ink-receiving layer containing a hydrophilic resin with 100 parts by weight and a white pigment with 2 to 20 parts by weight.

2. The resin composition according to claim 1, wherein the white pigment has an average particle diameter of 0.1 µm to 1.0 µm.

3. The resin composition according to claim 1, wherein the white pigment has a refractive index of 2.0 or more.

4. The resin composition according to claim 2 or 3, wherein the white pigment is a titanium oxide.

5. The resin composition according to claim 4, wherein the titanium oxide has an average particle diameter of 0.15 µm to 0.3 µm.

6. The resin composition according to claim 1, wherein the hydrophilic resin has a cationic polar group.

7. The resin composition according to claim 6, wherein the hydrophilic resin further has a cross-linking group.

8. The resin composition according to claim 1, further containing: a colloidal silica with 2 to 20 parts by weight with respect to the hydrophilic resin with 100 parts by weight.

9. The resin composition according to claim 8, wherein the colloidal silica is a colloidal silica of which a surface is treated by a basic compound.

10. The resin composition according to claim 1, further containing: a surface active agent with 0.01 to 1.0 parts by weight with respect to the hydrophilic resin with 100 parts by weight.

11. A method of forming an ink-receiving layer on an optical recording medium having light transmissivity, and having a first resin layer through which a laser beam is transmitted, a second resin layer, and an information layer held between the first and second resin layers, the method comprising:
coating a solution of the resin composition for forming the ink-receiving layer according to claim 1 on a surface of the second resin layer to form a coated layer; and
having the coated layer dried to be cured.

12. The method according to claim 11, wherein the resin compound for forming the ink-receiving layer is coated so as to make the ink-receiving layer have a thickness of 10 µm to 20 µm.

13. The method according to claim 11, wherein the solution of the resin compound for forming the ink-receiving layer is coated by a spin coating method or a slot coating method.
